(19) Europäisches Patentamt / European Patent Office / Office européen des brevets

(11) **EP 1 415 700 B1**

(12) **EUROPEAN PATENT SPECIFICATION**

(45) Date of publication and mention
of the grant of the patent:
**30.03.2011 Bulletin 2011/13**

(51) Int Cl.:
*B01D 53/86* (2006.01)       *B01J 23/22* (2006.01)
*B01J 23/30* (2006.01)       *B01J 27/053* (2006.01)
*B01J 23/42* (2006.01)

(21) Application number: **02758810.2**

(22) Date of filing: **08.08.2002**

(86) International application number:
**PCT/JP2002/008121**

(87) International publication number:
**WO 2003/015900 (27.02.2003 Gazette 2003/09)**

(54) **METHOD AND APPARATUS FOR REMOVING MERCURY IN FLUE GAS**

VERFAHREN UND VORRICHTUNG ZUR ENTFERNUNG VON QUECKSILBER IN RAUCHGAS

PROCEDE ET APPAREIL D'ELIMINATION DU MERCURE CONTENU DANS DES GAZ DE FUMEES

(84) Designated Contracting States:
**DE DK ES GB IT**

(30) Priority: **09.08.2001  JP 2001242596**

(43) Date of publication of application:
**06.05.2004  Bulletin 2004/19**

(73) Proprietor: **MITSUBISHI HEAVY INDUSTRIES, LTD.**
**Tokyo 100-8315 (JP)**

(72) Inventors:
• **HONJO, Shintaro**
  **MITSUBISHI HEAVY INDUSTRIES, LTD.**
  **Nishi-ku, Hiroshima-shi (JP)**
• **TAKASHINA, Toru**
  **MITSUBISHI HEAVY INDUSTRIES, LTD.**
  **Nishi-ku, Hiroshima-shi, Hiroshima (JP)**

• **IIDA, Kozo**
  **c/o MITSUBISHI HEAVY INDUSTRIES, LTD.**
  **Nishi-ku, Hiroshima-shi (JP)**
• **IMAI, Tetsuya**
  **c/o MITSUBISHI HEAVY INDUSTRIES, LTD**
  **Nishi-ku, Hiroshima-shi (JP)**
• **IWASHITA, Koichiro**
  **MITSUBISHI HEAVY INDUSTRIES LTD**
  **Chiyoda-ku, Tokyo 100-8315 (JP)**
• **NAGAYASU, Tatsuto**
  **MITSUBISHI HEAVY INDUSTRIES LTD.**
  **Chiyoda-ku, Tokyo 100-8315 (JP)**

(74) Representative: **HOFFMANN EITLE**
**Patent- und Rechtsanwälte**
**Arabellastraße 4**
**81925 München (DE)**

(56) References cited:
**EP-A1- 0 860 197       JP-A- 5 115 750**
**JP-A- 2000 197 811     US-A- 6 136 281**

## Description

Technical Field

The present invention relates to a method and apparatus for removing mercury from a waste gas, particularly, to a method and apparatus for effectively removing metal mercury from a waste gas in a system of desulfurizing a large amount of a waste gas.

Background Art

As known to the art, traces of harmful substances such as mercury are contained in the waste gas generated from the combustion of coal or a heavy hydrocarbon oil, and it is difficult in general to remove these traces of harmful substances by the flue gas processing system available nowadays. Mercury is considered to be present in the waste gas in the form of metal mercury or mercury chloride ($HgCl_2$). Mercury chloride can be easily absorbed in water and, thus, can be removed in, for example, an absorption tower included in a desulfurization plant. However, the solubility of metal mercury in water is very low and, thus, metal mercury is not absorbed in the absorption tower included in the desulfurization plant, with the result that metal mercury is likely to be discharged in the form of a metal mercury vapor to the air atmosphere through a chimney. Such being the situation, an activated char coal adsorption method or a sodium hypochlorite absorption method was used in the past as the method for removing metal mercury (Hg).

In respect of the activated char coal adsorption method, a method of, for example, blowing an activated char coal powder into a waste gas for recovering metal mercury in a bag filter has already been put to a practical use. However, this method is used mainly for processing a waste gas generated from a rubbish incineration and, thus, is costly and not adapted for use for processing a large volume of a waste gas generated from, for example, a power station.

When it comes to the sodium hypochlorite absorption method, known is a method that an additive such as sodium hypochlorite is added directly to, for example, a cooling water for a cooling tower or an absorption solution for an absorption tower included in a desulfurization plant, or to the water supplied to or circulated in a wet electric dust collecting machine. However, in any of these cases, the additive is added to the main equipment of the waste gas processing plant, with the result that it is possible for the essential function of the main equipment to be impaired depending on the kind of the additive.

For example, in the case of using the additive in a cooling tower, the additive is consumed for the absorption of $SO_x$. In addition, since the cooling water has a small pH value, the additive is consumed in a large amount for the decomposition of an oxidizing agent. In the case of using the additive in an absorption tower, the additive is consumed for the absorption of $SO_x$. At the same time, a peroxide compound or the like, which is the substance whose discharge to the air atmosphere is regulated, is generated. Further, when it comes to the case of using the additive in a wet electric dust collecting machine, the circulating water oxidizes and absorbs $SO_x$ so as to be made acidic, with the result that the metal material is likely to be corroded. What should also be noted is that the sodium hypochlorite absorption method is employed mainly for the processing of a small amount of a waste gas such a waste gas generated from the rubbish incineration and, thus, is not adapted for use for processing a large amount of a gas such as a waste gas generated from a power station.

On the other hand, the metal mercury is unlikely to be dissolved in water and, thus, is likely to pass through a desulfurization apparatus. However, it is possible to remove the metal mercury in a desulfurization apparatus if it is possible to make the metal mercury soluble in water. Such being the situation, it is conceivable to use a denitrification apparatus loaded with a catalyst. In this case, the metal mercury is converted on the catalyst into mercury chloride that is easy to be dissolved in water so as to remove mercury in a desulfurization apparatus on the downstream side. In other words, it is considered effective to use a flue gas processing method in which a chlorinating agent such as hydrogen chloride, which serves to convert the metal mercury into mercury chloride, is injected the upstream stage of the denitrification apparatus.

It has been found that the metal mercury is oxidized into mercury chloride on the catalyst in the presence of HCl by reaction (1) given below:

$$Hg + HCl + 1/2O_2 \rightarrow HgCl_2 + H_2O \qquad (1)$$

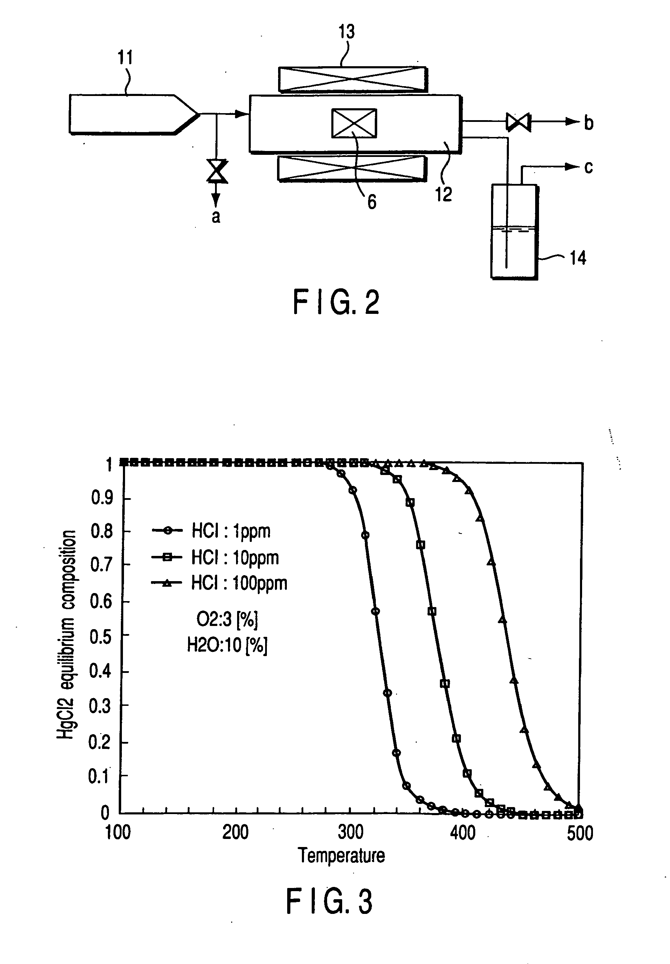

In the reaction system including the metal mercury, the HCl concentration in equilibrium is high as shown in FIG. 3, and mercury chloride is rendered more stable than the metal mercury with lowering of the temperature.

However, since the denitrification catalyst is arranged upstream of the air heater (AH) and the temperature under which the denitrification catalyst is used is limited to 300°C to 950°C, it was necessary to add an excessively large amount of the chlorinating agent such as HCl to the fuel having a low Cl content so as to allow mercury chloride to be rendered stable. However, if added in an excessively large amount, the chlorinating agent causes corrosion of the flue and the downstream apparatus included in the system so as to give rise to the problem that the life of the plant facility is shortened. Also, an additional problem is generated that the utility cost is increased depending on the injection amount of the chlorinating agent.

To be more specific, an air heater, a dust collector, a gas heater (heat exchanger) and a desulfurizing absorption tower are arranged in the order mentioned on the downstream side of the denitrification apparatus. Particularly, the corrosion and breakage of the apparatus are greatly affected by the chlorinating agent in the heat exchanger in which the cooling is performed. Also, since the chlorinating agent also enters the desulfurizing absorption tower, the chlorine concentration in the absorbing solution is increased so as to give rise to a problem in respect of the corrosion and breakage in the metal portion within the desulfurizing absorption tower. Further, if the chlorine concentration in the desulfurizing absorption tower is increased, a new problem is generated that the oxidizing performance in the desulfurizing step is lowered or the desulfurizing performance itself is lowered. In this case, it is possible for the performance of the entire system to be lowered. Further, with increase in the chlorine concentration, the foaming capability of the absorbing solution is increased. In this case, it is possible for the pressure loss within the absorption tower to be increased so as to increase the power for operating the desulfurizing absorption tower.

US Patent 6, 136, 281 describes a process for recovering mercury from a flue gas stream using an apparatus which comprises a channelling means to direct the flow of the flue gas, a novel metal coated substrate as an oxidizing means to convert Hg(0) to $HgCl_2$ in a flue gas exiting from the combustion furnace and a scrubbing means to remove from the flue gas the $HgCl_2$ formed.

Disclosure of Invention

A first object of the present invention is to provide a method of removing mercury from a waste gas, in which the metal mercury is oxidized into mercury chloride by a solid catalyst under a reaction temperature not higher than 300°C, followed by removing mercury by using an alkaline absorbing solution, thereby making it possible to oxidize stably the metal mercury into mercury chloride without adding a chlorinating agent such as HCl even in the case of using a fuel low in the Cl content.

A second object of the present invention is to provide an apparatus for removing mercury from a waste gas, which permits stably oxidizing the metal mercury into mercury chloride, comprising a catalytic oxidizing apparatus for oxidizing the metal mercury contained in a combustion waste gas containing $SO_x$ and mercury into mercury chloride under a reaction temperature not higher than 300°C by using a solid catalyst, a wet desulfurizing apparatus for removing mercury by using an alkaline absorbing solution, and a temperature control apparatus for controlling the reaction temperature in oxidizing the metal mercury into mercury chloride.

According to a first aspect of the present invention, which is intended to achieve the objects described above, there is provided a method of removing mercury from a combustion waste gas containing $SO_x$ and mercury by using an apparatus for removing mercury including a catalytic oxidizing apparatus in which the metal mercury is oxidized into mercury chloride in the presence of a solid catalyst, a wet desulfuring apparatus for removing mercury by using an alkaline absorbing solution, and a temperature control apparatus for controlling the reaction temperature in oxidizing the metal mercury into mercury chloride, characterized by comprising oxidizing the metal mercury into mercury chloride under the reaction temperature not higher than 300°C in the presence of a solid catalyst, and removing mercury by using an alkaline absorbing solution characterized in that used is a solid catalyst prepared by allowing at least one kind of active species selected from the group consisting of Pt, Ru, Rh, Rd, Ir, V, W, Mo, Ni, Co, Fe, Cr, Cu and Mn to be supported by a carrier consisting of at least one kind of a material selected from the group consisting of $TiO_2$, $SiO_2$, $ZrO_2$, $Al_2O_3$, and $WO_3$ and/or zeolite or a solid catalyst prepared by allowing at least one kind of a. VIII group metal selected from the group consisting of nickel, ruthenium, rhodium, palladium and platinum, and a sulfate or a precursor of the sulfate to be supported by a carrier consisting or a hydroxide or an oxide of at least one kind of a IV group metal selected from the group consisting of silicon, titanium and zirconium and/or the hydroxide or oxide of aluminum, followed by stabilization of the resultant catalytic system by baking.

Further, according to a second aspect of the present invention, there is provided an apparatus for removing mercury from a waste gas,characterized by comprising a catalytic oxidizing apparatus in which the metal mercury in a combustion waste gas containing $SO_x$ and mercury is oxidized into mercury chloride under the reaction temperature not higher than 300 °C in the presence of a solid catalyst, a wet desulfurizing apparatus for removing mercury by using an alkaline absorbing solution, a temperature control apparatus for controlling the reaction temperature in oxidizing the metal mercury into mercury chloride, and a solid catalyst, characterized in that used is a solid catalyst prepared by allowing at least one kind of active species selected from the group consisting of Pt, Ru, Rh, Rd, Ir, V, W, Mo, Ni, Co, Fe, Cr, Cu and Mn tobe supported by a carrier consisting of at least one kind of a material selected from the group consisting of $TiO_2$, $SiO_2$, $ZrO_2$, $Al_2O_3$, and $WO_3$ and/or zeolite, a solid catalyst prepared by allowing at least one kind of a VIII group metal selected from the group consisting of nickel, ruthenium, rhodium, palladium and platinum, and a sulfate or a precursor of the sulfate to be supported by a carrier consisting of a hydroxide or an oxide of at least one kind of a IV group metal selected from the group consisting of silicon, titanium and zirconium and/or the hydroxide or oxide of aluminum, followed by stabilization of the resultant catalytic system by baking.

In the present invention, it is desirable for the reaction temperature in carrying out the reaction between a combustion waste gas and the solid catalyst to fall within a range of between 60°C and 200°C. If the reaction is carried out within the temperature range given above, mercury chloride formed is rendered stable.

In the present invention, the metal mercury is oxidized into mercury chloride under the reaction temperature not higher than 300 °C. It should be noted in this connection that mercury chloride is rendered stable under temperatures not higher than 300 °C regardless of the properties of the fuel even in the case where the Cl content of the fuel is low.

In the present invention, it is desirable to measure the temperature of the combustion waste gas at the inlet port of the catalytic oxidizing apparatus and/or the concentration of the metal mercury or mercury chloride in the combustion waste gas at the outlet port of the catalytic oxidizing apparatus and to control the temperature of the combustion waste gas by using the temperature control apparatus at the inlet port of the catalytic oxidizing apparatus based on the measured value.

Further, in the present invention, it is desirable to arrange a temperature control means provided with at least one of a heating means using a heater or a steam and a cooling means using a cooler on the upstream side of the catalytic oxidizing apparatus. This is because the temperature control means serves to control the temperature of the combustion waste gas at the inlet port of the catalytic oxidizing apparatus. Also, it is desirable to arrange a heat exchanging means (heat exchanger) such as a gas-gas heater on the upstream side of the catalytic oxidizing apparatus because the heat exchanger serves to control the temperature of the combustion waste gas at the inlet port of the catalytic oxidizing apparatus.

According to the present invention of the particular construction, it is possible to oxidize the metal mercury stably into mercury chloride in the operation to remove mercury in a flue gas processing system capable of removing mercury, particularly, a metal mercury vapor, contained in a large amount of a gas such as a waste gas generated from a power station even if the fuel used has a low Cl content and even if a chlorinating agent such as HCl is not added to the reaction system. It follows that it is possible to operate the system efficiently and to maintain the performance of the system without giving detrimental effects to the downstream apparatuses.

To be more specific, since a chlorinating agent is not added to the reaction system, it is possible to prevent effectively the problem of the corrosion and breakage in respect of the apparatuses such as the heat exchanger and the desulfurizing absorption tower arranged downstream of the catalytic oxidizing apparatus. Also, the chlorine concentration in the desulfurizing absorption tower is increased so as to prevent the oxidizing performance or the desulfurizing performance from being lowered in the desulfurizing step or to prevent the foaming capability of the absorbing solution from being increased. It follows that it is possible to maintain or improve the performance of the entire system including the desulfurizing performance.

Further, according to the present invention, it is unnecessary to use a spraying facility of a chlorinating agent such as hydrogen chloride. Also, the utility cost such as the cost of the chlorinating agent is not required in the present invention. What should also be noted is that it is possible to apply the technical idea of the present invention to a waste gas source discharged at a lower temperature such as a combustion waste gas, and it is possible to operate efficiently the apparatus of the present invention and to maintain the performance of the apparatus as a stable mercury removing system by controlling the catalyst temperature.

Brief Description of Drawings

FIG. 1 is a block diagram schematically showing the construction of the apparatus for removing mercury from a waste gas according to one embodiment of the present invention;
FIG. 2 schematically shows the construction of the apparatus for removing mercury from a waste gas according to another embodiment of the present invention;
FIG. 3 is a graph showing the relationship between the temperature included in the waste gas conditions and the equilibrium composition ratio of the metal mercury/mercury chloride; and
FIG. 4 is a block diagram schematically showing the construction of an apparatus for removing mercury from a waste gas according to still another embodiment of the present invention.

Best Mode for Carrying Out the Invention

The present invention will now be described more in detail.

In the waste gas processing of the present invention for processing a waste gas containing sulfur oxides ($SO_x$) and the metal mercury (Hg), the metal mercury is oxidized into mercury chloride in a catalytic oxidizing apparatus, followed by carrying out a wet desulfurization by using an alkaline absorption solution. In the present invention, the waste gas temperature in the inlet port of the catalytic oxidizing apparatus is measured, and a temperature control means using a heating means such as a heater or steam or a heat exchanger such as a gas-gas heater (GGH) is arranged on the upstream side of the catalytic oxidizing apparatus so as to control the waste gas temperature to fall within a prescribed temperature range. Also, the metal mercury concentration or the mercury chloride concentration in the waste gas is consecutively measured at the outlet port of the catalytic oxidizing apparatus so as to permit the temperature control means or the heat exchanger referred to above to control the waste gas temperature in the inlet port of the catalytic oxidizing apparatus based on the measured mercury concentration. As a result, it is possible to oxidize efficiently the metal mercury into mercury chloride under the most effective temperature.

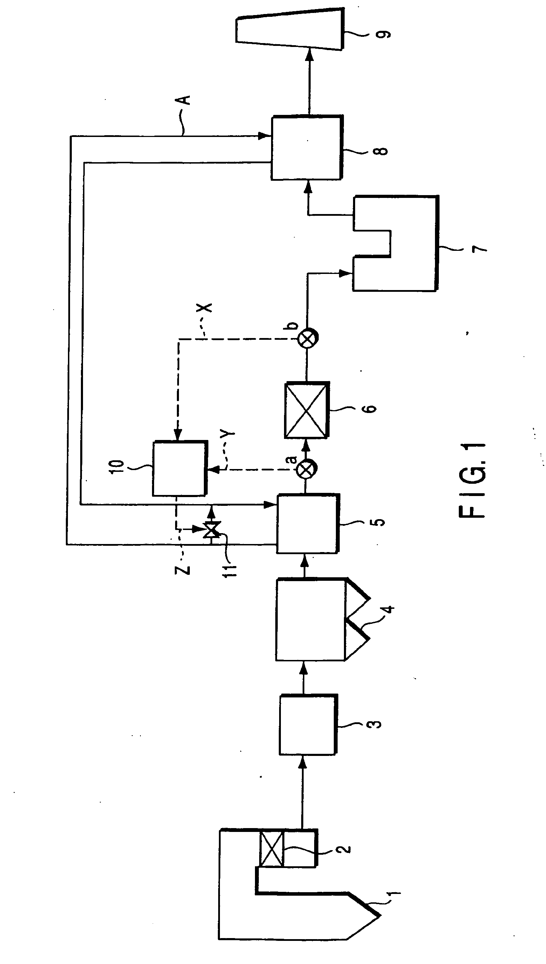

FIG. 1 shows an example of the system (apparatus for removing mercury from a waste gas) in the case of using the methods described above. The specific embodiment of the processing method of the present invention will now be described in detail with reference to the drawing.

In the present invention, a waste gas containing $SO_x$ and mercury is processed in the presence of a solid catalyst so as to oxidize the metal mercury into mercury chloride, followed by performing a wet desulfurization by using an alkaline absorbing solution. In carrying out the particular processing method, the waste gas is brought into contact with an absorbing solution such as a lime slurry circulating solution in a desulfurizing absorption tower arranged within the system so as to permit removal by absorption of $SO_x$. Also, among the mercury contained in the waste gas, mercury chloride ($HgCl_2$) is dissolved in the absorbing solution so as to be removed. However, the solubility in water of the metal mercury among the mercury contained in the waste gas is very low and, thus, is not removed by the absorbing solution. As a result, the metal mercury is contained in the waste gas from the desulfurizing absorption tower in the form of a metal mercury vapor so as to pass through the desulfurizing absorption tower 7.

Such being the situation, in the present invention, the metal mercury is converted into a water-soluble mercury chloride by a catalytic oxidizing apparatus arranged upstream of the desulfurizing apparatus and, then, the waste gas containing mercury chloride is guided into the desulfurizing absorption tower.

In the system shown in FIG. 1, a denitrification apparatus 2, an air heater (A/H) 3, a dust collector 4, a heat exchanger 5 for recovering the heat energy, a catalytic oxidizing apparatus 6, a desulfurizing absorption tower (wet desulfurizing apparatus) 7, a re-heater 8 and a chimney 9 are arranged downstream of a boiler 1 in the order mentioned. The system also comprises a temperature control apparatus 10 to which are supplied signals denoting a gas temperature Y in the inlet port "a" of the catalytic oxidizing apparatus 6 and a Hg concentration at the outlet port "b" and a heating medium flow rate control valve 11 to which a flow rate control signal is supplied from the temperature control apparatus 10.

The dust collector 4 included in the system shown in FIG. 1 is not particularly limited as far as it is possible to collect a coarse dust before the waste gas is introduced into the desulfurizing absorption tower 7. Also, the desulfurizing absorption tower 7 is not particularly limited. For example, it is possible to use a wet desulfurizing apparatus generally used for the processing of a flue gas or a desulfurizing apparatus having a cooling tower arranged in the front stage of the absorption tower.

It the wet desulfurizing system of the construction described above, the re-heater 8, etc. are arranged downstream of the desulfurizing absorption tower 7, and the waste gas is released into the air atmosphere from the chimney 9 through these apparatuses. It should be noted that the combustion waste gas of a lowered temperature is heated in the re-heater 8 by the heat energy recovered by the heat exchanger 5 in the front stage of the desulfurizing absorption tower 7. It should be noted in this connection that, if the waste gas of a lowered temperature is released as it is to the air atmosphere through the chimney 9, a problem is generated that a white smoke caused by, for example, a water vapor is generated. Such being the situation, in releasing the combustion waste gas into the air atmosphere, a gas after the cleaning is heated so as to permit a high temperature gas to be released into the air atmosphere. Therefore, in the present invention, the re-heater 8 for supplying heat to the waste gas is arranged downstream of the wet desulfurizing apparatus 7.

Incidentally, each of the heat exchanger 5 and the re-heater 8 is formed of a gas heater of the type that the heat energy is exchanged with a heating medium A used as a medium. It suffices for each of the heat exchanger 5 and the re-heater 8 to cool or heat the waste gas and, thus, it is possible for each of the heat exchanger 5 and the re-heater 8 to be a gas-gas heater for directly performing a heat exchange even if these heat exchanger 5 and re-heater 8 belong to different systems.

Chlorine contained in the fuel is present in the form of HCl in the waste gas generated from the boiler 1, and the metal mercury (Hg) is oxidized into mercury chloride ($HgCl_2$) in the presence of a catalyst within the catalytic oxidizing apparatus 6. In the desulfurizing absorption tower 7, $SO_2$ contained in the waste gas is removed together with $HgCl_2$. The HCl concentration is markedly higher than the Hg concentration in the waste gas and, thus, an excessively large amount of HCl is contained in the waste gas. However, since HCl is absorbed by an alkaline aqueous solution such as a lime water in the desulfurizing apparatus, HCl is not released into the air atmosphere through the chimney. The waste gas having Hg removed in the desulfurizing absorption tower 7 is introduced into the re-heater 8 so as to be heated by the heat energy recovered by the heat exchanger 5 and, then, is released into the air atmosphere through the chimney 9.

In the present invention of the particular construction described above, the metal mercury is oxidized into a water-soluble mercury compound in the presence of a solid catalyst, and the water-soluble mercury compound within the waste gas is removed in the wet desulfurizing process step. It should be noted in this connection that the optimum temperature for applying an oxidizing treatment to the metal mercury is changed depending on the Cl content in the fuel. Therefore, a problem is generated that the metal mercury is not sufficiently oxidized because the waste gas temperature is excessively higher or lower than the optimum temperature noted above so as to cause the metal mercury to be discharged into the air atmosphere.

Under the circumstances, in the embodiment of the present invention, the gas temperature within the catalytic oxidizing apparatus 6 is controlled to an appropriate temperature by adjusting the flow rate of the heating medium A supplied into the heat exchanger 5 arranged on the upstream side depending on the gas temperature in the inlet port "a" of the catalytic oxidizing apparatus 6 and/or the metal mercury concentration or the mercury chloride concentration in the outlet port "b".

Where the gas temperature within the catalytic oxidizing apparatus 6 is controlled by detecting the gas temperature at the inlet port "a" of the catalytic oxidizing apparatus 6, the gas temperature Y at the inlet port "a" of the catalytic oxidizing apparatus 6 is detected and compared with a reference temperature set in advance within the temperature control apparatus 10 depending on the kind of the fuel, and a flow rate control signal Z determined from the amount of change is supplied into the heating medium flow rate control valve 11. The amount of the heating medium supplied into the heat exchanger 5 is changed by adjusting the heating medium flow rate control valve 11 so as to control the gas temperature in the outlet port of the heat exchanger 5 at an appropriate temperature.

As described above, the apparatus for removing mercury from a waste gas, which is shown in FIG. 1, comprises the catalytic oxidizing apparatus 6, in which the metal mercury contained in the combustion waste gas containing $SO_x$ and mercury is oxidized into mercury chloride in the presence of a solid catalyst and under the reaction temperature not higher than 300°C, the desulfurizing absorption tower 7 in which mercury is removed by an alkaline absorbing solution, and the temperature control apparatus 10 for controlling the reaction temperature in oxidizing the metal mercury into mercury chloride. The particular construction of the present invention makes it possible to control the gas temperature in the outlet port of the heat exchanger 5 at an appropriate temperature. It follows that the metal mercury can be oxidized stably into mercury chloride even if a chlorinating agent such as HCl is not added to the reaction system so as to remove effectively the metal mercury from the waste gas.

The following description covers the case where the gas temperature in the catalytic oxidizing apparatus 6 is controlled by detecting the mercury concentration in the outlet port "b" of the catalytic oxidizing apparatus 6.

It should be noted that the metal mercury concentration in the inlet port "a" of the catalytic oxidizing apparatus 6 is determined by the kind of the fuel. On the other hand, the metal mercury concentration or the mercury chloride concentration in the outlet port "b" of the catalytic oxidizing apparatus 6 is determined by the relationship among the oxidizing rate of the metal mercury, the Hg concentration in the inlet port of the catalytic oxidizing apparatus 6, and the Hg concentration in the outlet port of the catalytic oxidizing apparatus 6, as shown in formulas (2) and (3) given below:

$$C_{out} = C_{in}(1 - \eta) \qquad (2)$$

$$C'_{out} = C_{in} \cdot \eta \qquad (3)$$

where $C_{in}$ represents the Hg concentration in the inlet port of the catalytic oxidizing apparatus 6, $C_{out}$ represents the Hg concentration in the outlet port of the catalytic oxidizing apparatus 6, $C'_{out}$ represents the $HgCl_2$ concentration in the outlet port of the catalytic oxidizing apparatus 6, and $\eta$ represents the oxidizing rate of the metal mercury.

As apparent from formulas (2) and (3) given above, the appropriate temperature can be obtained from the relationship between the catalyst temperature and the oxidizing rate of the metal mercury.

Under the circumstances, in the embodiment of the present invention, the gas temperature Y in the inlet port "a" of the catalytic oxidizing apparatus 6 and the concentration X of the metal mercury or mercury chloride in the outlet port "b" of the catalytic oxidizing apparatus 6 are detected, and the signal denoting the detected values are supplied to the temperature control device 10. In the temperature control device 10, the mercury oxidizing rate is calculated on the basis of the concentration X of the metal mercury or mercury chloride, and the optimum temperature is calculated from the relationship between the catalyst temperature set in advance depending on the kind of the fuel and the oxidizing rate of the metal mercury. Also, the gas temperature within the catalytic oxidizing apparatus 6 is compared with the gas temperature Y referred to above, and a flow rate control signal Z obtained from the amount of the change is supplied into the heating medium flow rate control valve 11. The amount of the heating medium supplied into the heat exchanger 5 is changed by the adjustment of the heating medium flow rate control valve 11 so as to control the gas temperature in the outlet port of the heat exchanger 5 at an appropriate temperature.

The waste gas processed in the present invention includes, for example, a waste gas generated from a thermoelectric power station utilizing combustion of a fuel containing sulfur and mercury such as coal or a heavy hydrocarbon oil, a waste gas generated from a boiler used in, for example, a factory, and a waste gas generated from a heating furnace included in a metal factory, a petroleum refinery, a petrochemical plant, etc. What should be noted is that the a large amount of a waste gas containing carbon dioxide, oxygen, $SO_x$, smuts or water is processed by the method and apparatus of the present invention.

The conventional wet desulfurizing apparatus can be used in the present invention. The absorbing solution used for the wet desulfurization includes an aqueous solution (alkaline absorbing solution) of absorbents such as calcium carbonate, calcium oxide, calcium hydroxide, sodium carbonate and caustic soda.

The solid catalyst used in the present invention includes a catalyst prepared by allowing at least one active species selected from the group consisting of Pt, Ru, Rh, Rd, Ir, V, W, Mo, Ni, Co, Fe, Cr, Cu and Mn to be supported by at least one carrier selected from the group consisting of $TiO_2$, $SiO_2$, $ZrO_2$, $Al_2O_3$ and $WO_3$ and/or zeolite. Also, it is possible to use a solid catalyst prepared by allowing at least one kind of a VIII group metal selected from the group consisting of nickel (Ni), ruthenium (Ru), rhodium (Rh), palladium (Pd) and platinum (Pt), silver sulfate or a precursor material of silver sulfate to be contained in a carrier such as a hydroxide or an oxide of at least one kind of a IV group metal selected from the group consisting of silicon (Si), titanium (Ti), and zirconium and/or hydroxide or oxide of aluminum, followed by calcining the resultant structure so as to stabilize the resultant structure.

It is particularly desirable to use titanium as a carrier. It should be noted that a catalyst prepared by allowing at least one kind of an oxide selected from the group consisting of an oxide of vanadium, tungsten or molybdenum to be supported as an active metal species in a carrier formed of a composite oxide of titanium exhibits a satisfactory activity.

In the present invention, it is desirable to use a titanium oxide in the form of a composite oxide in order to increase the specific surface area and the amount of the solid acid of the decomposing catalyst. The metal forming the composite oxide together with titanium includes, for example, silicon (Si), zirconium (Zr), aluminum (Al) and tungsten (W). To be more specific, it is possible to use a composite oxide containing titanium and silicon, a composite oxide containing titanium and zirconium, a composite oxide containing titanium and aluminum, and a composite oxide containing titanium and tungsten. Any of these composite oxides is unlikely to form a sulfate and, thus, permits maintaining a stable structure so as to make it possible to increase the specific surface area and the amount of the solid acid.

It is also possible to use a ternary composite oxide such as a composite oxide containing silicon and zirconium together with titanium, a composite oxide containing silicon and tungsten together with titanium, a composite oxide containing silicon and aluminum together with titanium, a composite oxide containing zirconium and aluminum together with titanium, and a composite oxide containing zirconium and tungsten together with titanium.

The composition of the carrier in the case of a composite oxide is not particularly limited. However, it is desirable for the carrier to contain, for example, 70 to 95 parts by weight of titanium and 30 to 5 parts by weight of an oxide of silicon (Si), zirconium (Zr), aluminum (Al) and/or tungsten (W). If the amount of the oxide falls within the range noted above, the catalyst contains the largest amount of the solid acid so as to exhibit a high catalytic activity. If the amount of the oxide fails to fall within the range noted above, it is impossible to obtain a sufficiently large amount of the solid catalyst.

Any metal salt such as a chloride, a sulfate and a nitrate can be used as the raw material for providing the elements forming the composite oxide. To be more specific, the metal salt in the form of an aqueous solution is dripped into an alkali aqueous solution such as an aqueous solution of ammonia or sodium carbonate so as to achieve co-precipitation. It is also possible to use each metal alkoxide raw material so as to obtain a complex hydroxide by means of, for example, hydrolysis. The complex hydroxide cake formed by the co-precipitation or hydrolysis is washed and, then, dried, followed by baking the dried cake under temperatures falling within a range of between 200°C and 650°C so as to obtain a desired composite oxide. It should be noted that, if the baking temperature is lower than 200°C, it is impossible to retain the metal salt in the form of an oxide. On the other hand, if the baking temperature exceeds 650°C, the particles are fused to each other so as to decrease the surface area of the catalyst.

In the catalyst used in the present invention, at least one element selected from the group consisting of Pt, Ru, Rh, Pd, Ir, V, W, Mo, Ni, Co, Fe, Cr, Cu and Mn is supported on the composite oxide used as a carrier. Any of the oxides exemplified above exhibits an oxidizing power so as to make it possible to oxidize th metal mercury into mercury chloride. Also, any of the oxides referred to above is excellent in durability relative to a sulfur compound and a heavy metal.

The components and the mixing ratio of the components of the catalyst composition are not particularly limited in the present invention. However, in a typical example, it is desirable for the catalyst to comprise 1 to 20 parts by weight of the catalytic component in the case of a one component system such as vanadium pentoxide relative to 100 parts by weight of the carrier consisting of a single kind of an oxide or a composite oxide. Likewise, in the case of a binary system, it is desirable to use a catalyst containing 1 to 10 parts by weight of vanadium pentoxide and 2 to 25 parts by weight of tungsten trioxide or a catalyst containing 1 to 10 parts by weight of vanadium pentoxide and 2 to 25 parts by weight of molybdenum trioxide. Likewise, in the case of a ternary system, it is desirable to use a catalyst containing 1 to 10 parts by weight of vanadium pentoxide, 1 to 20 parts by weight of tungsten trioxide and 1 to 20 parts by weight of molybdenum trioxide.

The catalytic activity of the catalyst is increased with increase in the amount of the active metal supported by the carrier. However, if the active metal is excessively supported by the carrier, it is possible to promote a side reaction such as the reaction to convert $SO_2$ into $SO_3$. Such being the situation, it is desirable for the amount of the active metal to fall within the range noted above. Incidentally, $SO_3$ generates a problem that corrosion of the equipment is brought about. Also, it is possible to use the metal oxide noted above singly. Alternatively, it is also possible to add an inorganic material to the metal oxide or to have the metal oxide supported by a substrate for use in the present invention.

Also, in the present invention, it is possible to use a solid catalyst prepared by allowing at least one kind of a VIII group metal selected from the group consisting of nickel, ruthenium, rhodium, palladium and platinum and a sulfate group or a precursor material of the sulfate group to be supported by a carrier consisting of a hydroxide or an oxide of at least one IV group metal selected from the group consisting of silicon, titanium and zirconium and/or a hydroxide or an oxide of aluminum, followed by baking the resultant structure so as to stabilize the resultant structure.

It is possible for the catalyst used in the catalytic oxidizing apparatus to be integrally molded and to assume an optional shape. For example, it is possible for the catalyst noted above to have a shape of a pellet, a plate or a cylinder. It is also possible for the catalyst to be corrugated or to have a honeycomb structure. Incidentally, it is naturally desirable for the catalyst to have a large contact area with the gas. However, it is undesirable for the catalyst to have an excessively large contact area with the gas because the fluidizing back pressure of the waste gas is increased depending on the degree of the loading density of a powdery catalyst. As a measure against the difficulty, it is desirable in general to use a molded catalyst of, for example, a honeycomb structure obtained by compressing a powdery catalyst to have a prescribed density without excessively decreasing the specific surface area of the catalyst.

In order to confirm the effect of removing mercury produced by the present invention, experiments were conducted as follows. Needless to say, the present invention is not limited at all by the description of the examples described below.

Methods of preparing honeycomb catalysts 1 to 5 will now be described.

[Preparation of Honeycomb Catalysts 1 and 2]

In the first step, an aqueous solution of titanyl sulfate ($TiSO_4$) and an aqueous solution of colloidal silica ($Si_2$) were mixed with each other in the mixing ratio $TiSO_4 : SiO_2$ of 90 : 10 by weight, followed by heating the mixed aqueous solution to 70°C. Then, an aqueous solution of ammonia was dripped into the heated mixed aqueous solution until the mixed solution was allowed to exhibit a pH value of 7 so as to form a co-precipitated slurry. Further, the slurry was stirred and aged for 2 hours at 70°C, followed by filtering the aged slurry and washing the filtrate so as to obtain a cake-like material. The cake-like material thus obtained was dried at 100°C and, then, baked at 500°C for 5 hours so as to obtain a composite oxide of $TiO_2 \cdot SiO_2$. The composite oxide thus obtained is called composite oxide 1 herein later.

In the next step, ammonium metavanadate was dissolved in an aqueous solution of methyl amine such that 5 parts by weight of $V_2O_5$ is contained in the aqueous solution relative to 100 parts by weight of the composite oxide 1, and the resultant aqueous solution was dripped onto the powdery oxide noted above.

The resultant mixture was repeatedly kneaded and dried so as to permit $V_2O_5$ to be supported by the composite oxide, thereby obtaining a sample. The sample thus obtained was baked at 500°C for 5 hours so as to obtain a powdery catalyst 1.

On the other hand, ammonium paratungstate and ammonium metavanadate were dissolved in an aqueous solution of methyl amine such that 8 parts by weight of $WO_3$ and 5 parts by weight of $V_2O_5$ were contained in the resultant solution relative to 100 parts by weight the composite oxide 1. Then, the resultant solution was dripped on the powdery composite oxide and the resultant mixture was repeatedly kneaded and dried so as to permit $WO_3$ and $V_2O_5$ to be supported by the composite oxide, thereby obtaining a sample. The sample thus obtained was baked at 500°C for 5 hours so as to obtain a powdery catalyst 2.

Further, an ammonia water was added to a mixture including 3 parts by weight of a glass fiber used as a binder, 3 parts by weight of kaolin and 3 parts by weight of cellulose acetate used as an organic plasticizer, followed by kneading the mixture. The kneaded mixture was subjected to an extrusion molding so as to obtain an integral molding of a honeycomb structure having a pitch of 5.0 mm (wall thickness of 1.0 mm). The molding thus obtained was dried and, then, baked at 500°C for 5 hours so as to remove the organic plasticizer, thereby obtaining honeycomb catalysts 1 and 2.

[Preparation of Honeycomb Catalyst 3]

A composite oxide 2 was obtained by a method similar to that employed for obtaining the composite oxide 1, except that zirconium oxynitride was added in place of the colloidal silica at a mixing ratio $TiO_2 : ZrO_2$ of 90 : 1 in the method of preparing the honeycomb catalysts 1 and 2. Then, a powdery catalyst 3 was obtained by using the composite oxide 2 by a method similar to that employed for obtaining the honeycomb catalysts 1 and 2. Further, a honeycomb catalyst 3 was prepared by a method similar to that employed for preparing the honeycomb catalysts 1 and 2.

[Preparation of Honeycomb Catalyst 4]

A zirconium hydroxide $(Zr(OH)_4)$ powder was impregnated with an aqueous solution of nickel sulfate containing 5 parts by weight of the metal nickel relative to 100 parts by weight of the carrier, followed by baking the impregnated zirconium hydroxide powder at 600°C for 3 hours so as to obtain a powdery catalyst 4. Then, a honeycomb catalyst 4 was prepared by a method similar to that employed for preparing the honeycomb catalysts 1 and 2.

[Preparation of Honeycomb Catalyst 5]

A titanium oxide $(TiO_2)$ powder was impregnated with an aqueous solution of platinic chloride containing 0.5 part by weight of Pt relative to 100 parts by weight of the carrier, followed by baking the impregnated titanium oxide powder at 500°C for 3 hours and subsequently reducing the baked material with hydrogen at 300°C for 1 hour so as to obtain a powdery catalyst 5. Then, a honeycomb catalyst 5 was prepared by a method similar to that employed for preparing the honeycomb catalyst 1.

Some Examples of the present invention will now be described.

(Example 1)

A test for evaluating the oxidizing rate of mercury and the mercury removal rate in an absorbing bottle was conducted in respect of each of three kinds of catalysts by using an apparatus for removing mercury from a waste gas shown in FIG. 2. In the apparatus used in Example 1, a $CO_2$ gas, an $O_2$ gas, a $H_2O$ vapor and HCl were added to a $N_2$ gas, and the mixed gas thus prepared was mixed with a vapor of the metal mercury so as to prepare a pseudo gas 11.

The pseudo gas 11 thus prepared was introduced into a reactor 12 provided with a catalytic oxidizing apparatus 6, and the catalyst temperature was controlled by an electric heater 13. The gas at the outlet port of the catalytic oxidizing apparatus 6 was partly introduced into an absorbing bottle 14.

The test was conducted under a gas amount of 90 l(liters) N/h(w), a catalyst SV of 3000 h⁻, a catalyst temperature of 120°C, a mercury concentration of 20 $\mu$g/m$^3$N, and a HCl concentration of 1 ppm, as shown in Table 1. The other test conditions are also shown in Table 1.

Table 1

| | |
|---|---|
| Gas amount | 90 IN/h |
| $H_2O$ | 7% |
| $CO_2$ | 12% |
| $O_2$ | 5% |
| $N_2$ | Balance |
| HCl | 1 ppm |
| Hg | 20 $\mu$ g/m$^3$N |
| P | Normal pressure |
| Temperature | 120°C |
| SV | 3000h$^{-1}$ |
| Catalyst | ① $V_2O_5/TiO_2$-$SiO_2$ <br> ② $V_2O_5$-$WO_3/TiO_2$-$SiO_2$ <br> ③ $V_2O_5$-$WO_3/TiO_2$-$ZrO_2$ |
| Liquid composition | 20 wt%$CaSO_4$, 0.2 M$CaCO_3$ |
| Absorbing solution temperature | 50°C |

During the test, an inlet gas "a" and an outlet gas "b" of the catalyst were sampled so as to measure the mercury concentration. The mercury chloride concentration was measured in the outlet gas "b" so as to obtain the mercury oxidizing rate with the catalyst by formula (4) given below:

$$L = M/N \times 100 \qquad \dots (4)$$

where L represents the mercury oxidizing rate (%), M represents the $HgCl_2$ concentration at the catalyst outlet port, and N represents the Hg concentration at the catalyst inlet port.

A gas c at the outlet port of the absorbing bottle was also sampled so as to measure the mercury removal rate in the absorbing bottle by formula (5) given below:

$$U = (V - M)/V \times 100 \qquad \dots (5)$$

where U represents the mercury removal rate (%), V represents the Hg concentration at the catalyst inlet port, and M represents the Hg concentration at the outlet port of the absorbing bottle.

The mercury oxidizing rates of the honeycomb catalysts 1, 2 and 3 were found to be 90%, 94% and 92%, respectively, supporting that each of these honeycomb catalysts exhibits a high mercury oxidizing rate. Also, the mercury removal rates in the absorbing bottle 14 were found to be 92%, 95% and 94% in the cases of using the honeycomb catalysts 1, 2 and 3, respectively, so as to support a high mercury removing performance. In conclusion, it has been clarified that the mercury removal system is effective even under a relatively low temperature and a low HCl concentration.

(Example 2)

A test for evaluating the oxidizing rate of mercury and the mercury removal rate in an absorbing bottle was conducted as in Example 1 in respect of two additional catalysts (honeycomb catalysts 4 and 5) by using the apparatus shown in FIG. 2 under a further lower temperature of 90°C. The test conditions for Example 2 were as shown in Table 2 given below:

Table 2

| | |
|---|---|
| Gas amount | 90 IN/h |
| $H_2O$ | 8% |
| $CO_2$ | 14% |
| $O_2$ | 4% |
| $N_2$ | Balance |
| HCl | 2 ppm |
| Hg | 20 $\mu g/m^3N$ |
| P | Normal pressure |
| Temperature | 90°C |
| SV | $1500h^{-1}$ |
| Catalyst | ④ $NiSO_4/TiO_2$<br>⑤ $Pt/TiO_2$ |
| Liquid composition | 20 wt%$CaSO_4$, 0.2 M$CaCO_3$ |
| Absorbing solution temperature | 50°C |

The mercury removal rates in the cases of using the honeycomb catalysts 4 and 5 were found to be 88% and 85%, respectively, supporting a high mercury oxidizing performance achieved in the cases of using each of these honeycomb catalysts 4 and 5. On the other hand, the mercury removal rates in the absorbing bottle in the cases of using the honeycomb catalysts 4 and 5 were found to be 90% and 88%, respectively, supporting a sufficiently high mercury removing performance.

(Example 3)

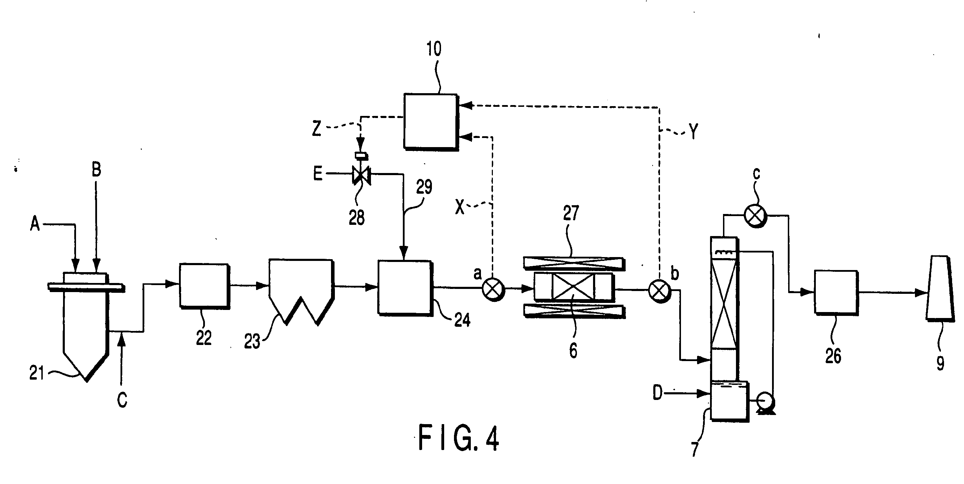

A test for evaluating the oxidizing rate of mercury and the mercury removal rate in a desulfurizing absorption tower was conducted by using an apparatus for removing mercury from a waste gas shown in FIG. 4 in respect of three kinds of catalysts. Table 3 given below shows the test conditions.

Table 3

| Gas amount | 200 m³N/h |
|---|---|
| $H_2O$ | 8% |
| $CO_2$ | 14% |
| $O_2$ | 4 % |
| $N_2$ | Balance |
| $SO_2$ | 500 ppm |
| HCl | 5 ppm |
| Hg | 10 μg/m³N |
| P | Normal pressure |
| Temperature | 120°C |
| SV | 3000h⁻¹ |
| Catalyst | ① $V_2O_5/TiO_2\text{-}SiO_2$<br>② $V_2O_5\text{-}WO_3/TiO_2\text{-}SiO_2$<br>③ $V_2O_5\text{-}WO_3/TiO_2\text{-}ZrO_2$ |
| Liquid composition | $0.5M(NH_4)_2SO_4$, 20 . wt%CaSO₄ |

The gist portions of the apparatus shown in FIG. 4 will now be described. Some members of the apparatus shown in FIG. 4 are equal to those of the apparatus shown in FIG. 1, and the common members are denoted by the same reference numerals so as to avoid the overlapping description.

A reference numeral 21 shown in FIG. 4 denotes a combustion furnace into which an air stream A and a finely pulverized coal B are continuously supplied for the combustion of the coal B so as to generate a combustion waste gas. An air pre-heater 22, an electric dust collector 23, a cooler 24, a catalytic oxidizing apparatus 6, a desulfurizing absorption tower 7, a heat exchanger 26 and a chimney 9 are connected in the order mentioned to the combustion furnace 21. Electric heaters 27 for controlling the waste gas temperature are arranged on the upper and lower sides of the catalytic oxidizing apparatus 6. Further, a cooling water is supplied into the cooler 24 through a pipe 29 having a flow rate adjusting valve 28 mounted thereto.

An air stream A and the finely pulverized coal B were continuously supplied into the combustion furnace 21 for the combustion of the coal B so as to generate a combustion waste gas. Also, a mercury vapor C was added to the combustion waste gas upstream of the air pre-heater 22 because the mercury concentration in the combustion waste gas was low, i.e., several μg/m³ N, so as to increase the mercury concentration in the inlet port of the air pre-heater 22 to about 10 μg/m³ N. The combustion waste gas was supplied as a gas having a temperature of about 120°C to the catalytic oxidizing tower 6 through the air pre-heater 22, the electric dust collector 23, and the cooler 24 supplied with a cooling water E. Incidentally, the electric heater 27 was controlled at 120°C so as to prevent the temperature of the waste gas from being lowered by, for example, the heat dissipation. The waste gas passing through the catalyst bed was supplied to the desulfurizing absorption tower 7 through which was circulated a slurry of an absorbing solution having a lime D added thereto so as to remove $SO_2$ and $HgCl_2$ contained in the waste gas. Further, the waste gas cleansed in the desulfurizing absorption tower 7 was discharged to the outside from the chimney 9 through the heat exchanger 26.

During the operation described above, the mercury concentration was measured at the inlet port "a" and the outlet port "b" of the catalytic oxidizing apparatus 6. The mercury chloride concentration was also measured at the outlet port "b" of the catalytic oxidizing apparatus 6 so as to obtain the mercury oxidizing rate achieved by the catalyst. Further, the mercury concentration was measured at the outlet port "c" of the desulfurizing absorption tower 7 so as to obtain the rate of mercury removal achieved in the desulfurizing absorption tower 7.

The mercury oxidizing rates achieved by the honeycomb catalysts 1, 2 and 3 were found to be 92%, 95% and 94%, respectively, supporting a high mercury oxidizing performance of each of these honeycomb catalysts. Also, the mercury removal rates in the absorbing bottle were found to be high, i.e., 94%, 96% and 95% in the cases of using the honeycomb catalysts 1, 2 and 3, respectively. In conclusion, it has been clarified that the present invention also provides an effective mercury removing system in the processing of a combustion waste gas.

(Example 4)

The stability of the mercury oxidizing performance was evaluated by using the mercury removing apparatus shown in FIG. 4 and the honeycomb catalyst 1. The mercury removing apparatus was operated under the conditions equal to those for Example 3. Specifically, the waste gas temperature X at the inlet port "a" of the catalytic oxidizing apparatus 6 was detected, and a flow rate adjusting signal Z was supplied to the flow rate adjusting valve 28 of the cooling water E based on the difference between the waste gas temperature X noted above and a reference temperature supplied to the temperature control apparatus 10 so as to control the gas temperature at the inlet port of the catalytic oxidizing apparatus 6 by adjusting the flow rate of the cooling water E. As a result, it has been confirmed that it is possible to control the oxidizing rate of mercury to fall within a range of $92\pm1\%$ by controlling the gas temperature at $120\pm5°C$.
Also, the gas temperature in the inlet port of the catalytic oxidizing apparatus 6 was controlled similarly by detecting the metal mercury concentration Y in the outlet port "b" of the catalytic oxidizing apparatus 6. As a result, it has been confirmed that it is possible to control the oxidizing rate of mercury to fall within a range of $92\pm1\%$ by controlling the gas temperature at $120\pm5°C$.
As described above, it has been clarified that a stable mercury oxidizing performance can be maintained by controlling the catalyst temperature.

**Claims**

1. A method of removing mercury from a combustion waste gas containing $SO_x$ and mercury by using an apparatus for removing mercury including a catalytic oxidizing apparatus in which the metal mercury is oxidized into mercury chloride in the presence of a solid catalyst, a wet desulfurizing apparatus for removing mercury by using an alkaline absorbing solution, and a temperature control apparatus for controlling the reaction temperature in oxidizing the metal mercury into mercury chloride, **characterized by** comprising oxidizing the metal mercury into mercury chloride under the reaction temperature not higher than 300°C in the presence of a solid catalyst, and removing mercury by using an alkaline absorbing solution,
**characterized in that** used is
a solid catalyst prepared by allowing at least one kind of active species selected from the group consisting of Pt, Ru, Rh, Rd, Ir, V, W, Mo, Ni, Co, Fe, Cr, Cu and Mn to be supported by a carrier consisting of at least one kind of a material selected from the group consisting of $TiO_2$, $SiO_2$, $ZrO_2$, $Al_2O_3$, and $WO_3$ and/or zeolite or
a solid catalyst prepared by allowing at least one kind of a. VIII group metal selected from the group consisting of nickel, ruthenium, rhodium, palladium and platinum, and a sulfate or a precursor of the sulfate to be supported by a carrier consisting of a hydroxide or an oxide of at least one kind of a IV group metal selected from the group consisting of silicon, titanium and zirconium and/or the hydroxide or oxide of aluminum, followed by stabilization of the resultant catalytic system by baking.

2. A method of removing mercury from a waste gas according to claim 1, **characterized in that** the temperature for the reaction between the combustion waste gas and the solid catalyst is controlled to fall within a range of between 60°C and 200°C.

3. A method of removing mercury from a waste gas according to claim 1, **characterized in that** the temperature of the combustion waste gas at the inlet port of the catalytic oxidizing apparatus and/or the metal mercury concentration or the mercury chloride concentration in the combustion waste gas in the outlet port of the catalytic oxidizing apparatus are measured so as to allow the temperature control apparatus to control the combustion waste gas temperature at the inlet port of the catalytic oxidizing apparatus based on the measured values.

4. A method of removing mercury from a waste gas according to claim 2, **characterized in that** the temperature of the combustion waste gas at the inlet port of the catalytic oxidizing apparatus and/or the metal mercury concentration or the mercury chloride concentration in the combustion waste gas in the outlet port of the catalytic oxidizing apparatus are measured so as to allow the temperature control apparatus to control the combustion waste gas temperature at the inlet port of the catalytic oxidizing apparatus based on the measured values.

**5.** A method of removing mercury from a waste gas according to claim 1, **characterized in that** the temperature control means includes at least one of a heating means using a heater or steam and a cooling means using a cooler so as to control the temperature of the combustion waste gas at the inlet port of the catalytic oxidizing apparatus.

**6.** A method of removing mercury from a waste gas according to claim 2, **characterized in that** the temperature control means includes at least one of a heating means using a heater or steam and a cooling means using a cooler so as to control the temperature of the combustion waste gas at the inlet port of the catalytic oxidizing apparatus.

**7.** A method of removing mercury from a waste gas according to claim 3, **characterized in that** the temperature control means includes at least one of a heating means using a heater or steam and a cooling means using a cooler so as to control the temperature of the combustion waste gas at the inlet port of the catalytic oxidizing apparatus.

**8.** A method of removing mercury from a waste gas according to claim 4, **characterized in that** the temperature control means includes at least one of a heating means using a heater or steam and a cooling means using a cooler so as to control the temperature of the combustion waste gas at the inlet port of the catalytic oxidizing apparatus.

**9.** A method of removing mercury from a waste gas according to claim 1, **characterized in that** the temperature of the combustion waste gas at the inlet port of the catalytic oxidizing apparatus is controlled by using a heat exchange means using a gas heater.

**10.** A method of removing mercury from a waste gas according to claim 2, **characterized in that** the temperature of the combustion waste gas at the inlet port of the catalytic oxidizing apparatus is controlled by using a heat exchange means using a gas heater.

**11.** A method of removing mercury from a waste gas according to claim 3, **characterized in that** the temperature of the combustion waste gas at the inlet port of the catalytic oxidizing apparatus is controlled by using a heat exchange means using a gas heater.

**12.** A method of removing mercury from a waste gas according to claim 4, **characterized in that** the temperature of the combustion waste gas at the inlet port of the catalytic oxidizing apparatus is controlled by using a heat exchange means using a gas heater.

**13.** An apparatus for removing mercury from a waste gas, **characterized by** comprising a catalytic oxidizing apparatus in which the metal mercury in a combustion waste gas containing $SO_x$ and mercury is oxidized into mercury chloride under the reaction temperature not higher than 300°C in the presence of a solid catalyst, a wet desulfurizing apparatus for removing mercury by using an alkaline absorbing solution, a temperature control apparatus for controlling the reaction temperature in oxidizing the metal mercury into mercury chloride, and a solid catalyst, **characterized in that** used is a solid catalyst prepared by allowing at least one kind of active species selected from the group consisting of Pt, Ru, Rh, Rd, Ir, V, W, Mo, Ni, Co, Fe, Cr, Cu and Mn to be supported by a carrier consisting of at least one kind of a material selected from the group consisting of $TiO_2$, $SiO_2$, $ZrO_2$, $Al_2O_3$, and $WO_3$ and/or zeolite, or a solid catalyst prepared by allowing at least one kind of a VIII group metal selected from the group consisting of nickel, ruthenium, rhodium, palladium and platinum, and a sulfate or a precursor of the sulfate to be supported by a carrier consisting of a hydroxide or an oxide of at least one kind of a IV group metal selected from the group consisting of silicon, titanium and zirconium and/or the hydroxide or oxide of aluminum, followed by stabilization of the resultant catalytic system by baking.

**14.** An apparatus for removing mercury from a waste gas according to claim 13, **characterized in that** at least one of a heating means using a heater or steam and a cooling means using a cooler is arranged upstream of the catalytic oxidizing apparatus.

**15.** An apparatus for removing mercury from a waste gas according to claim 13, **characterized in that** a heat exchange means using a gas heater is arranged upstream of the catalytic,oxidizing apparatus.

**Patentansprüche**

**1.** Verfahren zum Entfernen von Quecksilber aus einem Verbrennungsabgas, das $SO_x$ und Quecksilber enthält, unter Verwendung einer Vorrichtung zum Entfernen von Quecksilber, umfassend eine katalytisch-oxidierende Vorrichtung, worin das metallische Quecksilber zu Quecksilberchlorid in der Gegenwart eines festen Katalysators oxidiert wird, eine Nass-Entschwefelungsvorrichtung zum Entfernen von Quecksilber unter Verwendung einer alkalischen, absorbierenden Lösung, und eine Temperaturkontrollvorrichtung zum Kontrollieren der Reaktionstemperatur beim Oxidieren des metallischen Quecksilbers zu Quecksilberchlorid, **dadurch gekennzeichnet, dass** es das Oxidieren des metallischen Quecksilbers zu Quecksilberchlorid bei einer Reaktionstemperatur von nicht höher als 300°C in der Gegenwart eines festen Katalysators und das Entfernen von Quecksilber unter Verwendung einer alkalischen absorbierenden Lösung umfasst, **dadurch gekennzeichnet, dass** verwendet wird

ein fester Katalysator, hergestellt durch Trägern von zumindest einer aktiven Spezies, ausgewählt aus der Gruppe bestehend aus Pt, Ru, Rh, Rd, Ir, V, W, Mo, Ni, Co, Fe, Cr, Cu und Mn auf einem Träger, der aus zumindest einer Art von Material besteht, ausgewählt aus der Gruppe bestehend aus TiO2, SiO2, ZrO$_2$, A1203 und WO$_3$ und/oder Zeolite, oder

ein fester Katalysator, hergestellt durch Trägern von mindestens einer Art von Gruppe VIII-Metall, ausgewählt aus der Gruppe bestehend aus Nickel, Ruthenium, Rhodium, Palladium und Platin, und einem Sulfat oder einem Vorläufer des Sulfats auf einem Träger, der aus einem Hydroxid oder einem Oxid von zumindest einer Art von Gruppe IV-Metall, ausgewählt aus der Gruppe bestehend aus Silicium, Titan und Zirkonium, und/oder dem Hydroxid oder Oxid von Aluminium besteht, gefolgt von Stabilisierung des resultierenden katalytischen Systems durch Backen.

2. Verfahren zum Entfernen von Quecksilber aus einem Abgas gemäß Anspruch 1, **dadurch gekennzeichnet, dass** die Temperatur für die Reaktion zwischen dem Verbrennungsabgas und dem festen Katalysator so kontrolliert wird, dass sie innerhalb des Bereichs zwischen 60°C und 200°C fällt.

3. Verfahren zum Entfernen von Quecksilber aus einem Abgas gemäß Anspruch 1, **dadurch gekennzeichnet, dass** die Temperatur des Verbrennungsabgases am Einlass der katalytisch-oxidierenden Vorrichtung und/oder die Konzentration von metallischem Quecksilber oder die Quecksilberchloridkonzentration in dem Verbrennungsabgas am Auslass der katalytisch-oxidierenden Vorrichtung gemessen werden/wird, um es so der Temperaturkontrollvorrichtung zu ermöglichen, die Verbrennungsabgastemperatur am Einlass der katalytisch-oxidierenden Vorrichtung auf Grundlage der gemessenen Werte zu kontrollieren.

4. Verfahren zum Entfernen von Quecksilber aus einem Abgas gemäß Anspruch 2, **dadurch gekennzeichnet, dass** die Temperatur des Verbrennungsabgases am Einlass der katalytisch-oxidierenden Vorrichtung und/oder die Konzentration von metallischem Quecksilber oder die Quecksilberchloridkonzentration in dem Verbrennungsabgas am Auslass der katalytisch-oxidierenden Vorrichtung gemessen wird/werden, um es so der Temperaturkontrollvorrichtung zu ermöglichen, die Verbrennungsabgastemperatur am Einlass der katalytisch-oxidierenden Vorrichtung auf Grundlage der gemessenen Werte zu kontrollieren.

5. Verfahren zum Entfernen von Quecksilber aus einem Abgas gemäß Anspruch 1, **dadurch gekennzeichnet, dass** die Temperaturkontrollmittel mindestens eines von einem Erwärmungsmittel unter Verwendung eines Heizers oder von Dampf und einem Kühlmittel unter Verwendung eines Kühlers umfassen, um so die Temperatur des Verbrennungsabgases am Einlass der katalytisch-oxidierenden Vorrichtung zu kontrollieren.

6. Verfahren zum Entfernen von Quecksilber aus einem Abgas gemäß Anspruch 2, **dadurch gekennzeichnet, dass** die Temperaturkontrollmittel mindestens eines von einem Erwärmungsmittel unter Verwendung eines Heizers oder von Dampf und einem Kühlmittel unter Verwendung eines Kühlers umfassen, um so die Temperatur des Verbrennungsabgases am Einlass der katalytisch-oxidierenden Vorrichtung zu kontrollieren.

7. Verfahren zum Entfernen von Quecksilber aus einem Abgas gemäß Anspruch 3, **dadurch gekennzeichnet, dass** die Temperaturkontrollmittel mindestens eines von einem Erwärmungsmittel unter Verwendung eines Heizers oder von Dampf und einem Kühlmittel unter Verwendung eines Kühlers umfassen, um so die Temperatur des Verbrennungsabgases am Einlass der katalytisch-oxidierenden Vorrichtung zu kontrollieren.

8. Verfahren zum Entfernen von Quecksilber aus einem Abgas gemäß Anspruch 4, **dadurch gekennzeichnet, dass** die Temperaturkontrollmittel mindestens eines von einem Erwärmungsmittel unter Verwendung eines Heizers oder von Dampf und einem Kühlmittel unter Verwendung eines Kühlers umfassen, um so die Temperatur des Verbrennungsabgases am Einlass der katalytisch-oxidierenden Vorrichtung zu kontrollieren.

9. Verfahren zum Entfernen von Quecksilber aus einem Abgas gemäß Anspruch 1, **dadurch gekennzeichnet, dass** die Temperatur des Verbrennungsabgases am Einlass der katalytisch-oxidierenden Vorrichtung unter Verwendung eines Wärmeaustauschmittels unter Verwendung eines Gasheizers kontrolliert wird.

EP 1 415 700 B1

**10.** Verfahren zum Entfernen von Quecksilber aus einem Abgas gemäß Anspruch 2, **dadurch gekennzeichnet, dass** die Temperatur des Verbrennungsabgases am Einlass der katalytisch-oxidierenden Vorrichtung unter Verwendung eines Wärmeaustauschmittels unter Verwendung eines Gasheizers kontrolliert wird.

**11.** Verfahren zum Entfernen von Quecksilber aus einem Abgas gemäß Anspruch 3, **dadurch gekennzeichnet, dass** die Temperatur des Verbrennungsabgases am Einlass der katalytisch-oxidierenden Vorrichtung unter Verwendung eines Wärmeaustauschmittels unter Verwendung eines Gasheizers kontrolliert wird.

**12.** Verfahren zum Entfernen von Quecksilber aus einem Abgas gemäß Anspruch 4, **dadurch gekennzeichnet, dass** die Temperatur des Verbrennungsabgases am Einlass der katalytisch-oxidierenden Vorrichtung unter Verwendung eines Wärmeaustauschmittels unter Verwendung eines Gasheizers kontrolliert wird.

**13.** Vorrichtung zum Entfernen von Quecksilber aus einem Abgas, **dadurch gekennzeichnet, dass** sie eine katalytisch-oxidierende Vorrichtung, worin metallisches Quecksilber in einem Verbrennungsabgas, das $SO_x$ und Quecksilber enthält, zu Quecksilberchlorid bei einer Reaktionstemperatur von nicht höher als 300°C in der Gegenwart eines festen Katalysators oxidiert wird, eine Nass-Entschwefelungsvorrichtung zum Entfernen von Quecksilber unter Verwendung einer alkalischen, absorbierenden Lösung, eine Temperaturkontrollvorrichtung zum Kontrollieren der Reaktionstemperatur beim Oxidieren des metallischen Quecksilbers zu Quecksilberchlorid und einen festen Katalysator umfasst, **dadurch gekennzeichnet, dass** verwendet wird ein fester Katalysator, hergestellt durch Trägern von zumindest einer aktiven Spezies, ausgewählt aus der Gruppe bestehend aus Pt, Ru, Rh, Rd, Ir, V, W, Mo, Ni, Co, Fe, Cr, Cu und Mn, auf einen Träger, bestehend aus zumindest einer Art von Material, das ausgewählt ist aus der Gruppe bestehend aus Ti02, Si02, $ZrO_2$, A1203 und $WO_3$ und/oder Zeolite, oder
ein fester Katalysator, hergestellt durch Trägern von mindestens einer Art von Gruppe VIII-Metall, ausgewählt aus der Gruppe bestehend aus Nickel, Ruthenium, Rhodium, Palladium und Platin, und einem Sulfat oder einem Vorläufer des Sulfats, auf einen Träger, bestehend aus einem Hydroxid oder einem Oxid von zumindest einer Art von Gruppe IV-Metall, ausgewählt aus der Gruppe bestehend aus Silicium, Titan und Zirkonium, und/oder dem Hydroxid oder Oxid von Aluminium, gefolgt von Stabilisieren des resultierenden katalytischen Systems durch Backen.

**14.** Vorrichtung zum Entfernen von Quecksilber aus einem Abgas gemäß Anspruch 13, **dadurch gekennzeichnet, dass** zumindest eines von einem Erwärmungsmittel, bei dem eine Erwärmungsvorrichtung oder Dampf verwendet wird, und einem Kühlmittel, bei dem ein Kühler verwendet wird, in Flussrichtung oberhalb der katalytisch-oxidierenden Vorrichtung angeordnet ist.

**15.** Vorrichtung zum Entfernen von Quecksilber aus einem Abgas gemäß Anspruch 13, **dadurch gekennzeichnet, dass** ein Wärmeaustauschmittel, bei dem ein Gaserwärmungsmittel verwendet wird, in Flussrichtung oberhalb der katalytisch-oxidierenden Vorrichtung angeordnet ist.

**Revendications**

**1.** Procédé d'enlèvement de mercure d'un gaz résiduaire de combustion contenant du $SO_x$ et du mercure en utilisant un appareil pour enlever du mercure incluant un appareil d'oxydation catalytique dans lequel le mercure métallique est oxydé en chlorure de mercure en présence d'un catalyseur solide, un appareil de désulfuration humide pour enlever du mercure en utilisant une solution absorbante alcaline, et un appareil de commande de température pour commander la température de réaction lors de l'oxydation du mercure métallique en chlorure de mercure, **caractérisé en ce qu'**il comprend l'oxydation du mercure métallique en chlorure de mercure sous la température de réaction non supérieure à 300 °C en présence d'un catalyseur solide, et d'enlèvement du mercure en utilisant une solution absorbante alcaline,
**caractérisé en ce que** l'on utilise
un catalyseur solide préparé en permettant à au moins une sorte d'espèce active sélectionnée à partir du groupe constitué par Pt, Ru, Rh, Rd, Ir, V, W, Mo, Ni, Co, Fe, Cr, Cu et Mn d'être supportée par un porteur consistant en au moins une sorte d'une matière sélectionnée à partir du groupe constitué par $TiO_2$, $SiO_2$, $ZrO_2$, $Al_2O_3$, et $WO_3$ et/ou de la zéolite ou un catalyseur solide préparé en permettant à au moins une sorte d'un métal du groupe VIII sélectionné à partir du groupe constitué par le nickel, le ruthénium, le rhodium, le palladium et le platine, et un sulfate ou un précurseur du sulfate, d'être supportée par un porteur consistant en un hydroxyde ou un oxyde d'au moins une sorte d'un métal du groupe IV sélectionné à partir du groupe constitué par le silicium, le titane et le zirconium et/ou l'hydroxyde ou l'oxyde d'aluminium, suivi par stabilisation du système catalytique résultant par cuisson.

**2.** Procédé d'enlèvement de mercure d'un gaz résiduaire selon la revendication 1, **caractérisé en ce que** la température pour la réaction entre le gaz résiduaire de combustion et le catalyseur solide est commandée pour tomber dans une plage entre 60 °C et 200 °C.

**3.** Procédé d'enlèvement de mercure d'un gaz résiduaire selon la revendication 1, **caractérisé en ce que** la température du gaz résiduaire de combustion à l'orifice d'entrée de l'appareil d'oxydation catalytique et/ou la concentration en mercure métallique ou la concentration en chlorure de mercure dans le gaz résiduaire de combustion dans l'orifice de sortie de l'appareil d'oxydation catalytique sont mesurées de façon à permettre à l'appareil de commande de température de commander la température de gaz résiduaire de combustion à l'orifice d'entrée de l'appareil d'oxydation catalytique sur base des valeurs mesurées.

**4.** Procédé d'enlèvement de mercure d'un gaz résiduaire selon la revendication 2, **caractérisé en ce que** la température du gaz résiduaire de combustion à l'orifice d'entrée de l'appareil d'oxydation catalytique et/ou la concentration en mercure métallique ou la concentration en chlorure de mercure dans le gaz résiduaire de combustion dans l'orifice de sortie de l'appareil d'oxydation catalytique sont mesurées de façon à permettre à l'appareil de commande de température de commander la température de gaz résiduaire de combustion au niveau de l'orifice d'entrée de l'appareil d'oxydation catalytique sur base des valeurs mesurées.

**5.** Procédé d'enlèvement de mercure d'un gaz résiduaire selon la revendication 1, **caractérisé en ce que** le moyen de commande de température inclut au moins l'un d'un moyen de chauffage utilisant un dispositif de chauffage ou de la vapeur et d'un moyen de refroidissement utilisant un refroidisseur de façon à commander la température du gaz résiduaire de combustion à l'orifice d'entrée de l'appareil d'oxydation catalytique.

**6.** Procédé d'enlèvement de mercure d'un gaz résiduaire selon la revendication 2, **caractérisé en ce que** le moyen de commande de température inclut au moins l'un d'un moyen de chauffage utilisant un dispositif de chauffage ou de la vapeur et d'un moyen de refroidissement utilisant un refroidisseur de façon à commander la température du gaz résiduaire de combustion à l'orifice d'entrée de l'appareil d'oxydation catalytique.

**7.** Procédé d'enlèvement de mercure d'un gaz résiduaire selon la revendication 3, **caractérisé en ce que** le moyen de commande de température inclut au moins l'un d'un moyen de chauffage utilisant un dispositif de chauffage ou de la vapeur et d'un moyen de refroidissement utilisant un refroidisseur de façon à commander la température du gaz résiduaire de combustion à l'orifice d'entrée de l'appareil d'oxydation catalytique.

**8.** Procédé d'enlèvement de mercure d'un gaz résiduaire selon la revendication 4, **caractérisé en ce que** le moyen de commande de température inclut au moins l'un d'un moyen de chauffage utilisant un dispositif de chauffage ou de la vapeur et d'un moyen de refroidissement utilisant un refroidisseur de façon à commander la température du gaz résiduaire de combustion à l'orifice d'entrée de l'appareil d'oxydation catalytique.

**9.** Procédé d'enlèvement de mercure d'un gaz résiduaire selon la revendication 1, **caractérisé en ce que** la température du gaz résiduaire de combustion à l'orifice d'entrée de l'appareil d'oxydation catalytique est commandée en utilisant un moyen d'échange de chaleur utilisant un dispositif de chauffage de gaz.

**10.** Procédé d'enlèvement de mercure d'un gaz résiduaire selon la revendication 2, **caractérisé en ce que** la température du gaz résiduaire de combustion à l'orifice d'entrée de l'appareil d'oxydation catalytique est commandée en utilisant un moyen d'échange de chaleur utilisant un dispositif de chauffage de gaz.

**11.** Procédé d'enlèvement de mercure d'un gaz résiduaire selon la revendication 3, **caractérisé en ce que** la température du gaz résiduaire de combustion à l'orifice d'entrée de l'appareil d'oxydation catalytique est commandée en utilisant un moyen d'échange de chaleur utilisant un dispositif de chauffage de gaz.

**12.** Procédé d'enlèvement de mercure d'un gaz résiduaire selon la revendication 4, **caractérisé en ce que** la température du gaz résiduaire de combustion à l'orifice d'entrée de l'appareil d'oxydation catalytique est commandée en utilisant un moyen d'échange de chaleur utilisant un dispositif de chauffage de gaz.

**13.** Appareil pour enlever du mercure d'un gaz résiduaire, **caractérisé en ce qu'**il comprend un appareil d'oxydation catalytique dans lequel le mercure métallique dans un gaz résiduaire de combustion contenant du $SO_x$ et du mercure est oxydé en chlorure de mercure sous la température de réaction non supérieure à 300 °C en présence d'un catalyseur solide, un appareil de désulfuration humide pour enlever du mercure en utilisant une solution absorbante alcaline, un appareil de commande de température pour commander la température de réaction lors de l'oxydation du mercure métallique en chlorure de mercure, et un catalyseur solide, **caractérisé en ce que** l'on utilise un catalyseur solide préparé en permettant à au moins une sorte d'espèce active sélectionnée à partir du groupe constitué par Pt, Ru, Rh, Rd, Ir, V, W, Mo, Ni, Co, Fe, Cr, Cu et Mn d'être supportée par un porteur consistant en au moins une sorte d'une matière sélectionnée à partir du groupe constitué par $TiO_2$, $SiO_2$, $ZrO_2$, $Al_2O_3$ et $WO_3$ et/ou de la zéolite, ou un catalyseur solide préparé en permettant à au moins une sorte d'un métal du groupe VIII sélectionné à partir du groupe constitué par le nickel, le ruthénium, le rhodium, le palladium et le platine, et un sulfate ou un précurseur du sulfate, d'être supportée par un porteur consistant en un hydroxyde ou un oxyde d'au moins une sorte d'un métal du groupe IV sélectionné à partir du groupe constitué par le silicium, le titane et le zirconium et/ou l'hydroxyde ou l'oxyde d'aluminium, suivi par stabilisation du système catalytique résultant par cuisson.

14. Appareil pour enlever du mercure d'un gaz résiduaire selon la revendication 13, **caractérisé en ce qu'**au moins un d'un moyen de chauffage utilisant un dispositif de chauffage ou de la vapeur et d'un moyen de refroidissement utilisant un refroidisseur est agencé en amont de l'appareil d'oxydation catalytique.

15. Appareil pour enlever du mercure d'un gaz résiduaire selon la revendication 13, **caractérisé en ce qu'**un moyen d'échange de chaleur utilisant un dispositif de chauffage de gaz est agencé en amont de l'appareil d'oxydation catalytique.

FIG.1

FIG. 2

FIG. 3

FIG. 4

**EP 1 415 700 B1**

**REFERENCES CITED IN THE DESCRIPTION**

**Patent documents cited in the description**

- US 6136281 A